# EUROPEAN PATENT APPLICATION

(11) **EP 1 930 300 A2**
(43) Date of publication of application: **11.06.2008**
(21) Application number: 07446009.8
(22) Date of filing: 04.12.2007
(51) Int. Cl.: C02F 11/00

(54) **Method and device for recycling of cleaning fluid**

(30) Priority: 06.12.2006 SE 0602627
(71) Applicant: Scania CV AB (publ), 151 87 Södertälje (SE)
(72) Inventor: Dizdarevic, Suada, 383 32, Mönsterås (SE)
(74) Representative: Sjögren Paulsson, Stina

(57) **Abstract**

The invention relates to a device for recycling of cleaning fluid (4), where the recycling device (2) comprises at least a separating device (6) and a collecting receptacle (8), where the separating device (6) is arranged to separate, from with paint contaminated cleaning fluid (10) comprising water, solvent, and paint residue, at least parts of the water and the solvent in the state of a distillate (12), where the recycling device (2) further comprises means (7) for conveying forward the separated purified distillate (12) to the collecting receptacle (8) where means (15, 17) are arranged to supply new water (16) and/or new solvent (18), in such a quantity that the contents of the collecting receptacle (8) reach the mixing proportion between water and solvent that is required in clean cleaning fluid (4). The invention further relates to a method for recycling of cleaning fluid.

## Description

### Technical field

The present invention relates to a method and a device for recycling of cleaning fluid.

### Background

Usually vehicles are coloured by that their body is painted. When changing colour in the painting equipment, the tubing and other colour distribution systems are cleaned free from the previously used colour shade by that the said tubing is rinsed through with cleaning fluid. The cleaning fluid usually contains water and solvent. When the cleaning fluid is flushed through the tubing, it disengages paint residue that is carried away with the cleaning fluid out from the tubing. After cleaning of the tubing, the cleaning fluid containing solvent is thus contaminated with paint residue.

A problem with the above cleaning method is that a large quantity of waste containing water, solvent and paint residue arises.

One example of a device for separating of paint particles is shown in DE 35 42 957 A1, where the paint is firstly separated from an air flow that has passed through a paint spraying box by that the air flow passes a waterseal, whereafter the paint is separated from the water by that the paint constituents are precipitated in a coagulation plant, which water thereafter is brought back to the water seal by means of a pump.

### Brief description of the invention

The problem with that a large quantity of waste containing water, solvent and paint residue arises when cleaning painting equipment is solved according to the invention by a device for recycling of cleaning fluid according to claim 1 and a method for recycling of cleaning fluid according to claim 10.

By that a device according to claim 1 and a method according to claim 10 comprises the characteristics that a separating device is arranged to separate, from with paint contaminated cleaning fluid comprising water, solvent, and paint residue, at least parts of the water and the solvent in the state of a distillate, where means are arranged for conveying forward the separated purified distillate to a collecting receptacle where means are arranged to supply new water and/or new solvent in such a quantity that the contents of the collecting receptacle reach the mixing proportion between water and solvent that is required in clean cleaning fluid, the advantage of decrasing the quantity of waste containing water, solvent and paint residue when cleaning painting equipment is attained. Further, the advantage of that a large quantity of water and solvent can be recycled whereby the consumption of water and solvent when cleaning painting equipment can be decreased is attained. By separating water and solvent from the cleaning liquid in several steps, the quantity of waste containing water, solvent and paint residue can be decreased further.

### Brief description of drawings

The invention will be described below in greater detail with reference to the attached drawings, in which:
Figure 1 shows schematically a device for recycling of cleaning fluid according to a first embodiment of the invention,
Figure 2 shows schematically a device for recycling of cleaning fluid according to a second embodiment of the invention,
Figure 3 shows schematically a device for recycling of cleaning fluid according to a third embodiment of the invention, and
Figure 4 shows schematically a device for recycling of cleaning fluid according to a fourth embodiment of the invention.

### Description of preferred embodiments

Similar parts in the different drawings are designated with the same reference numerals.

In this description, distillate refers to both distillate from a distiller and condensate of evaporated steam from an evaporation apparatus.

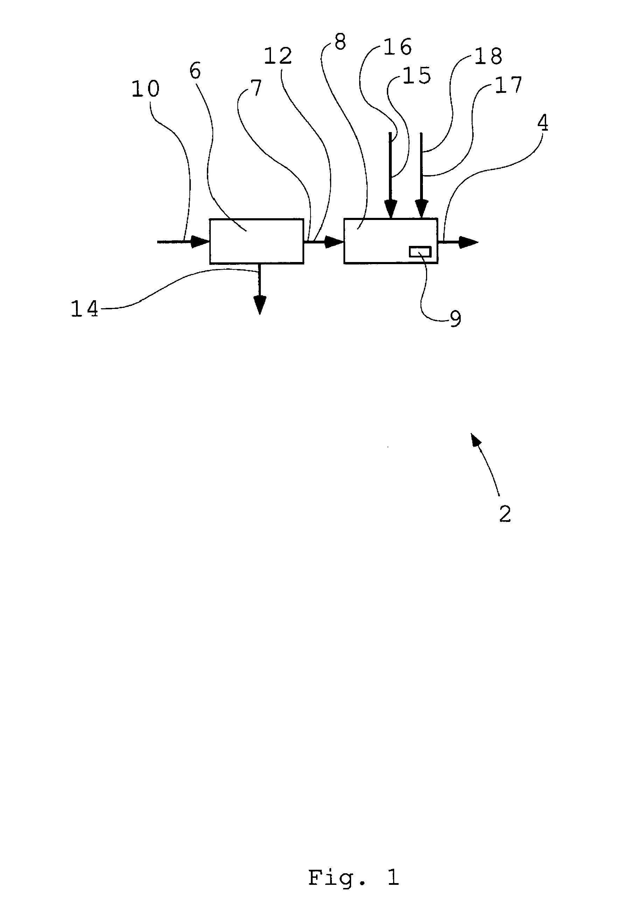

Figure 1 shows schematically a device 2 for recycling of cleaning fluid 4 according to a first embodiment of the invention, where the recycling device 2 comprises at least a separating device 6 and a collecting receptacle 8. The separating device 6 is arranged to separate, from with paint contaminated cleaning fluid 10 comprising water, solvent, and paint residue, at least parts of the water and the solvent in the state of a distillate, where means are arranged for conveying forward the separated purified distillate in the form of water and solvent forming a from paint purified fluid 12 to the collecting receptacle 8, where the means preferably is a tube line 7. The paint residue and the water and the solvent which has not been separated forms a residual product 14 which is conveyed out from the separating device 6 to be deposited or destructed. In the collecting receptacle 8, the proportion of water and the proportion of solvent is checked, preferably with a measuring equipment 9 arranged in the collecting receptacle 8, whereafter means are arranged to supply new water 16 and/or new solvent 18, where the means preferably are tube lines 15 and 17, respectively, in such a quantity that the contents of the collecting receptacle 8 reach the mixing proportion between water and solvent that is required in clean cleaning fluid. When the required mixing proportion has been reached, the contents that now comprise purified cleaning fluid 4 is conveyed out from the collecting receptacle 8.

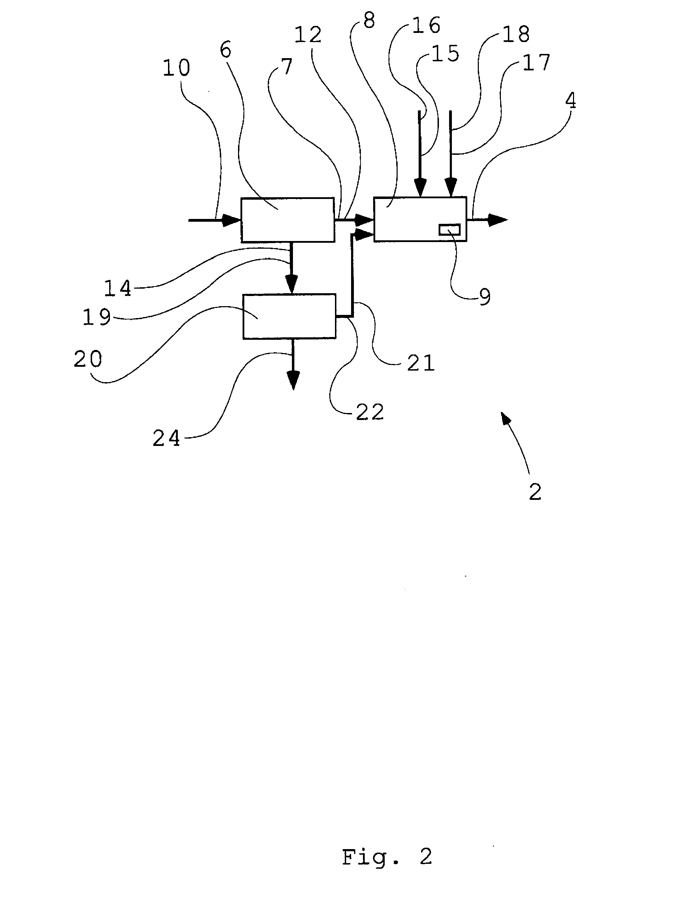

Figure 2 shows schematically a device 2 for recycling of cleaning fluid 4 according to a second embodiment of the invention, where the recycling device 2 comprises at least two separating devices 6, 20 and a collecting receptacle 8. The first separating device 6 is arranged to separate, from with paint contaminated cleaning fluid 10 comprising water, solvent, and paint residue, at least parts of the water and the solvent in the state of a distillate, where means are arranged for conveying forward the separated purified distillate in the form of water and solvent forming a from paint purified fluid 12 to the collecting receptacle 8, where the means preferably is a tube line 7. The paint residue and the water and the solvent which has not been separated forms a residual product 14 which is conveyed out from the first separating device 6 and further to the second separating device 20, preferably via means in the form of a tube line 19. The second separating device 20 is arranged to separate, from the residual product 14 comprising water, solvent and paint residue, at least parts of the water and the solvent in the state of a distillate, where the separated purified distillate in the form of water and solvent forming from paint purified liquid 22 is conveyed further to the collecting receptacle 8, preferably via means in the form of a tube line 21. The paint residue and the solvent that has not been separated, forms a further residual product 24 which is conveyed out from the second separating device 22 to be deposited or destructed. In the collecting receptacle 8, the proportion of water and the proportion of solvent is checked, preferably with a measuring equipment 9 arranged in the collecting receptacle 8, whereafter new water 16 and/or new solvent 18 is supplied, preferably via means in the form of tube lines 15 and 17, respectively, in such a quantity that the contents of the collecting receptacle 8 reach the mixing proportion between water and solvent that is required in clean cleaning fluid. When the required mixing proportion has been reached, the contents that now comprise purified cleaning fluid 4 is conveyed out from the collecting receptacle 8.

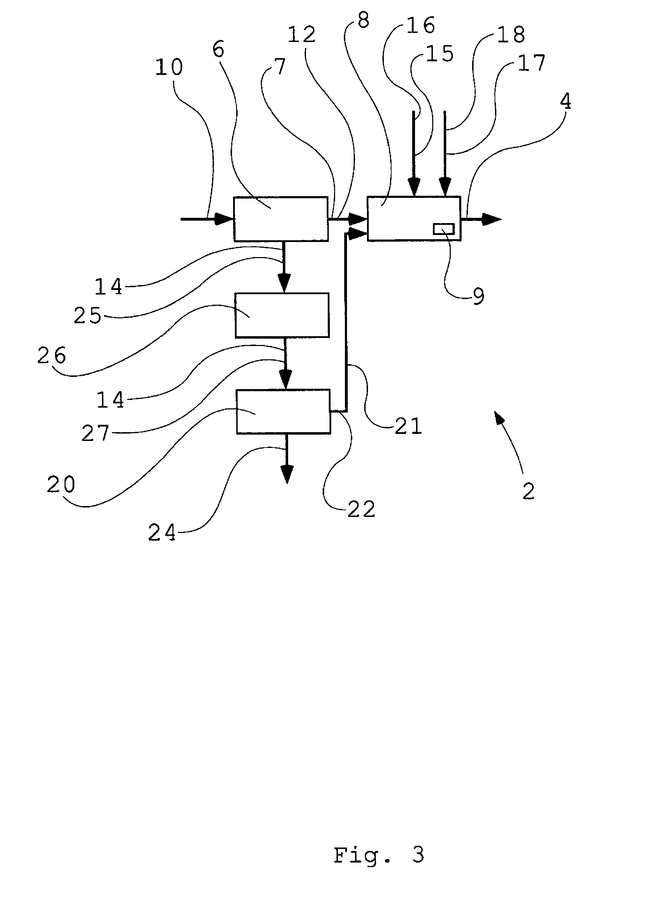

Figure 3 shows schematically a device 2 for recycling of cleaning fluid 4 according to a third embodiment of the invention, which third embodiment differs from the above mentioned second embodiment in that the residual product 14 comprising the paint residue and the water and the solvent that has not been separated in the first separating device 6 is conveyed out from the first separating device 6 and further, preferably via means in the form of a tube line 25, to an intermediate buffer 26 from where the residual product 14 is conveyed further, preferably via means in the form of a tube line 27, to the second separating device 20. The intermediate buffer 26 which preferably is a receptacle such as a tank is used to buffer the residual product 14 in case the first separating device 6 gives off such a large quantity of residual product 14 that the second separating device 20 cannot receive and process this quantity immediately.

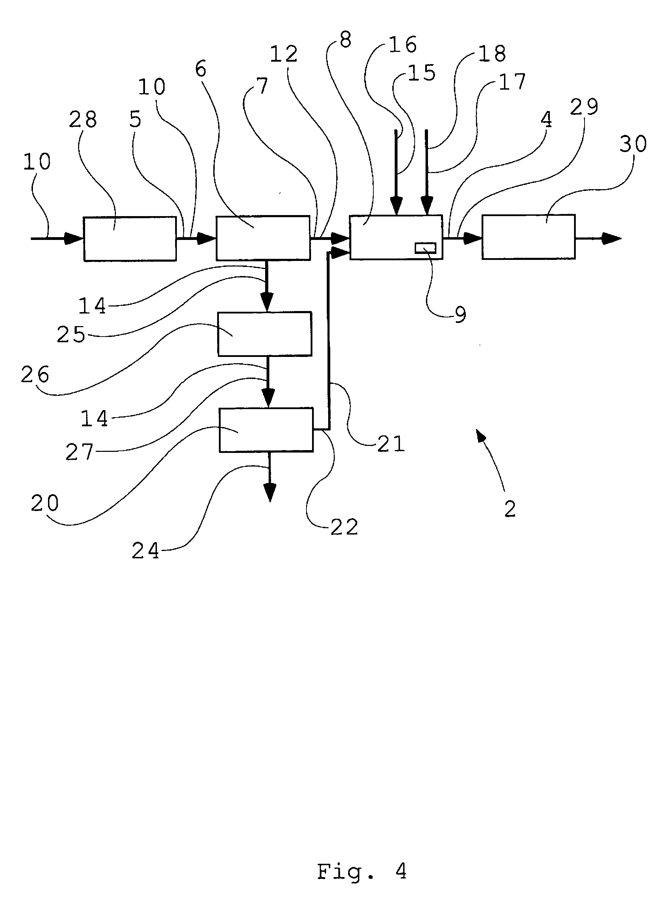

Figure 4 shows schematically a device 2 for recycling of cleaning fluid 4 according to a fourth embodiment of the invention, which fourth embodiment differs from the above mentioned first, second and third embodiments by that it comprises a collecting buffer 28 and/or a cleaning fluid buffer 30 which buffers 28,30 preferably are receptacles such as tanks. The with paint contaminated cleaning fluid 10 is first conveyed into the collecting buffer 28 and from there further on, preferably via means in the form of a tube line 5, to the first separating device 6. The collecting buffer 28 is used to buffer the with paint contaminated cleaning fluid 10 in case the first separating device 6 can not receive and process this quantity immediately. Cleaning fluid 4 from the collecting receptacle 8 is conveyed, preferably via means in the form of a tube line 29, to the cleaning fluid buffer 30. The cleaning fluid buffer 30 is used to buffer cleaning fluid 4 in case the cleaning fluid which is conveyed out from the collecting receptacle 8 is not immediately needed for cleaning.

The invention thus relates to a device for recycling of cleaning fluid 4, where the recycling device 2 comprises at least a separating device 6 and a collecting receptacle 8, and where the separating device 6 is arranged to separate, from with paint contaminated cleaning fluid 10 comprising water, solvent, and paint residue, at least parts of the water and the solvent in the state of a distillate, where the recycling device 2 further comprises means 7 for conveying forward the separated purified distillate 12 to the collecting receptacle 8 where means 15, 17 are arranged to supply new water 16 and/or new solvent 18 in such a quantity that the contents of the collecting receptacle 8 reach the mixing proportion between water and solvent that is required in clean cleaning fluid 4.

The invention further relates to a method for recycling of cleaning fluid 4 with a recycling device 2 comprising at least a separating device 6 and a collecting receptacle 8, where the recycling method comprises the steps of:
- to separate in the separating device 6, from with paint contaminated cleaning fluid 10 comprising water, solvent and paint residue, at least parts of the water and the solvent in the state of a distillate 12,
- to convey further the separated purified distillate (12) to the collecting receptacle 8,
- to check the proportion of water and the proportion of solvent in the collecting receptacle 8, and
- to supply new water 16 and/or new solvent 18 to the collecting receptacle 8 in such a quantity that the contents of the collecting receptacle 8 reach the mixing proportion between water and solvent that is required in clean cleaning fluid 4.

The first separating device 6 is preferably an evaporation apparatus, but can also be a distiller.

The second separating device 20 is preferably a distiller, but can also be an evaporation apparatus.

The flow from the first separating device 6 and the second separating device 20, respectively, to the collecting receptacle 8 can be controlled by use of e.g. valves preferably arranged in the tube lines 7 and 21, respectively. Also in other tube lines, valves can be arranged to control the flow.

With a device for recycling of cleaning fluid according to the third embodiment of the invention, the quantity of hazardous waste can be reduced by up to the size order of 85% and the quantity of solvent that is needed be reduced with up to the size order of 50% by that water and solvent in the cleaning fluid is recycled in the process. The residual product 24 is a dry paint sludge in powder form which preferably is handed over for destruction.

The water that is used is preferably distilled water.
The solvent that is used can e.g. comprise 2-Butoxi ethanol and 2-Metoximetyletoxi propanol. The solvent is preferably waterborne.

The cleaning fluid contains preferably water around 80 per cent by volume and solvent around 20 percent by volume.

## Claims

1. Device for recycling of cleaning fluid (4), where the recycling device (2) comprises at least a separating device (6) and a collecting receptacle (8), **characterized in, that** the separating device (6) is arranged to separate, from with paint contaminated cleaning fluid (10) comprising water, solvent, and paint residue, at least parts of the water and the solvent in the state of a distillate (12), where the recycling device (2) further comprises means (7) for conveying forward the separated purified distillate (12) to the collecting receptacle (8) where means (15, 17) are arranged to supply new water (16) and/or new solvent (18), in such a quantity that the contents of the collecting receptacle (8) reach the mixing proportion between water and solvent that is required in clean cleaning fluid (4).

2. Device for recycling of cleaning fluid as claimed in claim 1, **characterized in, that** the recycling device comprises a measuring equipment (9) arranged to check the proportion of water and the proportion of solvent in the collecting receptacle (8).

3. Device for recycling of cleaning fluid as claimed in claim 1 or claim 2, **characterized in, that** the recycling device (2) comprises a further separating device (20) which is arranged to separate, from a from a first separating device (6) conveyed residual product (14) comprising water, solvent and paint residue, at least parts of the water and the solvent in the state of a distillate, where the recycling device (2) comprises means (21) for conveying the separated purified distillate (22) further to the collecting receptacle (8).

4. Device for recycling of cleaning fluid as claimed in claim 3, **characterized in, that** the recycling device (2) comprises an intermediate buffer (26) and means (25) for conveying the residual product (14) comprising the paint residue and the water and the solvent that has not been separated in the first separating device (6) out from the first separating device (6) and further to said intermediate buffer (26) and means (27) for conveying out the residual product (14) from said intermediate buffer (26) further to the second separating device (20).

5. Device for recycling of cleaning fluid as claimed in any one of the above claims, **characterized in**, the recycling device comprises a cleaning fluid buffer (30) and means (29) for conveying the purified cleaning fluid (4) from the collecting receptacle (8) to the cleaning fluid buffer (30) when the required mixing proportion between water and solvent in the collecting receptacle (8) has been reached.

6. Device for recycling of cleaning fluid as claimed in any one of the above claims, **characterized in, that** the recycling device comprises a collecting buffer (28) and means (5) for conveying the with paint contaminated cleaning fluid (10) from the collecting buffer (28) to the first separating device (6).

7. Device for recycling of cleaning fluid as claimed in any one of the above claims, **characterized in, that** at least one separating device (6, 20) is an evaporation apparatus.

8. Device for recycling of cleaning fluid as claimed in any one of the above claims, **characterized in, that** at least one separating device (6, 20) is a distiller.

9. Device for recycling of cleaning fluid as claimed in any one of the above claims, **characterized in, that** the device is arranged to recycle cleaning fluid (4) comprising distilled water (16) and a solvent (18) comprising 2-Butoxi ethanol and 2-Metoximetyletoxi propanol.

10. Method for recycling of cleaning fluid (4) with a recycling device (2) comprising at least a separating device (6) and a collecting receptacle (8), **characterized in, that** the recycling method comprises the steps of:
- to separate in the separating device (6), from with paint contaminated cleaning fluid (10) comprising water, solvent and paint residue, at least parts of the water and the solvent in the state of a distillate (12),
- to convey further the separated purified distillate (12) to the collecting receptacle (8),
- to check the proportion of water and the proportion of solvent in the collecting receptacle (8), and
- to supply new water (16) and/or new solvent (18) to the collecting receptacle (8) in such a quantity that the contents of the collecting receptacle (8) reach the mixing proportion between water and solvent that is required in clean cleaning fluid (4).

11. Method for recycling of cleaning fluid as claimed in claim 10, **characterized in, that** the recycling method further comprises the steps of
- to separate in a further separating device (20) of the recycling device (2), from a first separating device (6) conveyed residual product (14) comprising water, solvent and paint residue, at least parts of the water and the solvent in the state of a distillate (22), and
- to convey the separated purified distillate (22) further to the collecting receptacle (8).

12. Method for recycling of cleaning fluid as claimed in claim 11, **characterized in, that** the recycling method further comprises the steps of:
- to convey the residual product (14) comprising the paint residue and the water and the solvent that has not been separated in the first separating device (6) out from the first separating device (6) and further to an intermediate buffer (26), and
- to convey the residual product (14) from said intermediate buffer (26) further to the second separating device (20).

13. Method for recycling of cleaning fluid as claimed in one of the claims 10-12, **characterized in, that** the recycling method further comprises the steps of:
- to convey the purified cleaning fluid (4) from the collecting receptacle (8) to a cleaning fluid buffer (30) when the required mixing proportion between water and solvent has been reached in the collecting receptacle (8).

14. Method for recycling of cleaning fluid as claimed in one of the claims 10-13, **characterized in, that** the recycling method further comprises the step of:
- to convey the with paint contaminated cleaning fluid (10) from a collecting buffer (28) to the first separating device (6).

15. Method for recycling of cleaning fluid as claimed in one of the claims 10-14, **characterized in, that** that the recycling method further comprises the step of:
- to arrange at least one separating device (6, 20) in the form of an evaporation apparatus or a distiller.
